(19) Europäisches Patentamt
European Patent Office
Office européen des brevets

(11) EP 2 419 456 B1

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **10711901.8**

(22) Anmeldetag: **31.03.2010**

(51) Int Cl.:
***C08F 2/44*** *(2006.01)* ***C08F 2/24*** *(2006.01)*
***C08F 292/00*** *(2006.01)* ***C08F 220/00*** *(2006.01)*
***C08F 230/08*** *(2006.01)*

(86) Internationale Anmeldenummer:
**PCT/EP2010/054332**

(87) Internationale Veröffentlichungsnummer:
**WO 2010/118961 (21.10.2010 Gazette 2010/42)**

(54) **VERFAHREN ZUR HERSTELLUNG EINER WÄSSRIGEN KOMPOSITPARTIKEL-DISPERSION**

METHOD FOR PRODUCING AN AQUEOUS COMPOSITE PARTICLE DISPERSION

PROCÉDÉ DE FABRICATION D'UNE DISPERSION AQUEUSE DE PARTICULES COMPOSITES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.04.2009 EP 09157984**

(43) Veröffentlichungstag der Anmeldung:
**22.02.2012 Patentblatt 2012/08**

(73) Patentinhaber: **BASF SE**
**67056 Ludwigshafen (DE)**

(72) Erfinder:
- **LOHMEIJER, Bas**
  **68199 Mannheim (DE)**
- **WIESE, Harm**
  **69514 Laudenbach (DE)**
- **JAHNS, Ekkehard**
  **69469 Weinheim (DE)**

(56) Entgegenhaltungen:
**WO-A1-01/18081** **WO-A1-01/29106**
**WO-A1-03/000760** **WO-A2-2004/092481**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 419 456 B1

## Beschreibung

Gegenstand der vorliegenden Erfindung ist ein Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, welches dadurch gekennzeichnet ist, dass

a) 1 bis 1000 Gew.-% eines anorganischen Feststoffes mit einer mittleren Teilchengröße ≤ 100 nm und 0,05 bis 2 Gew.-% eines radikalischen Polymerisationsinitiators, bezogen auf die Gesamtmenge an ethylenisch ungesättigten Monomeren (Gesamtmonomerenmenge) eingesetzt werden,

b) wenigstens eine Teilmenge des anorganischen Feststoffs in einem wässrigen Polymerisationsmedium in Form einer wässrigen Feststoffdispersion vorgelegt wird, daran anschließend

c) der erhaltenen wässrigen Feststoffdispersion insgesamt ≥0,01 und ≤20 Gew.-% der Gesamtmonomerenmenge an ethylenisch ungesättigten Monomeren und ≥60 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥80 Gew.-% polymerisiert werden (Polymerisationsstufe 1), und daran anschließend dem erhaltenen Polymerisationsgemisch

d) die gegebenenfalls verbliebene Restmenge des anorganischen Feststoffs, die gegebenenfalls verbliebene Restmenge des radikalischen Polymerisationsinitiators und die verbliebene Restmenge der ethylenisch ungesättigten Monomeren unter Polymerisationsbedingungen zudosiert und bis zu einem Monomerenumsatz ≥90 Gew.-% polymerisiert werden (Polymerisationsstufe 2).

Wässrige Kompositpartikel-Dispersionen sind allgemein bekannt. Es handelt sich dabei um wässrige fluide Systeme, die aus mehreren ineinander verschlungenen Polymerisatketten bestehenden Polymerisatknäuel (die sogenannte Polymermatrix) und feinteiligem anorganischen Feststoff aufgebaute Partikel (Kompositpartikel) in wässrigem Dispergiermedium in disperser Verteilung befindlich enthalten. Der mittlere Durch-messer der Kompositpartikel liegt in der Regel im Bereich ≥10 nm und ≤1000 nm, oft im Bereich ≥50 nm und ≤400 nm und häufig im Bereich ≥100 nm und ≤300 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760, WO 06072464, WO08135422 sowie in Long et al., Tianjin Daxue Xuebao 1991, 4, Seiten 10 bis 15, Bourgeat-Lami et al.,Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410 offenbart.

Darüber hinaus wird in der unveröffentlichten europäischen Patentanmeldung mit dem Aktenzeichen 07119197.7 die Verwendung silanolgruppenhaltiger Verbindungen zur Herstellung wässriger Kompositpartikel-Dispersionen offenbart.

Die nach den im Stand der Technik offenbarten Verfahren hergestellten wässrigen Kompositpartikel-Dispersionen vermögen allerdings häufig im Hinblick auf die resultierenden Koagulatgehalte nicht immer zu befriedigen.

Aufgabe der vorliegenden Erfindung war daher die Bereitstellung eines neuen Herstellverfahrens für stabile wässrige Kompositpartikel-Dispersionen, welche einen geringen Gehalt an Koagulat aufweisen.

In überraschender Weise wurde die Aufgabe durch das eingangs definierte Verfahren gelöst.

Für das erfindungsgemäße Verfahren wird klares Wasser, beispielsweise klares Trinkwasser, insbesondere vorteilhaft jedoch entionisiertes Wasser eingesetzt, dessen Gesamtmenge so bemessen wird, dass sie ≥30 und ≤99 Gew.-% und vorteilhaft ≥35 und ≤95 Gew.-% und insbesondere vorteilhaft ≥40 und ≤90 Gew.-%, bezogen auf die wässrige Kompositpartikel-Dispersion, beträgt. Erfindungsgemäß wird wenigstens eine Teilmenge des Wassers in Verfahrensschritt b) im Polymerisationsgefäß vorgelegt und die gegebenenfalls verbliebene Restmenge in wenigstens einem der nachfolgenden Verfahrensschritten c) oder d) zudosiert.

Für das erfindungsgemäße Verfahren sind prinzipiell alle diejenigen feinteiligen anorganischen Feststoffe geeignet, welche einen mittleren Teilchendurchmesser >0 und ≤100 nm aufweisen.

Als erfindungsgemäß einsetzbare feinteilige anorganische Feststoffe sind prinzipiell Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Nyacol Nano Technologies Inc.), Aluminiumoxid (beispielsweise kommerziell verfügbar als Nyacol® AL-Marken der Fa. Nyacol Nano Technologies Inc.), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Nyacol Nano Technologies Inc.), Cer-(IV)-oxid (beispielsweise kommerziell verfügbar als Nyacol® CE02-Marken der Fa. Nyacol Nano Technologies Inc.) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Sasol Germany GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH und Optigel® EX 0482 (Marken der Südchemie AG), Saponit® SKS-20 und Hektorit® SKS 21 (Marken der Hoechst AG) sowie Laponite® RD und Laponite® GS (Marken der Rockwood Holdings Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tartrate, wie Calciumtartrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Evionik AG), Nalco® (Marke der Fa. Nalco), Levasil® (Marke der Fa. H.C. Stark GmbH), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und Atmosphärendruck (1 atm = 1,013 bar absolut) $\leq$1 g/l, bevorzugt $\leq$0,1 g/l und insbesondere bevorzugt $\leq$0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Produkte der Nanofil®-, Optigel®-, Cloisite®- (Marken der Fa. Südchemie AG), Somasif®-, Lucentite®- (Marken der Fa. CBC Japan Co., Ltd.), Saponit®- Hektorit®- (Marken der Fa. Höchst AG) sowie Laponite®-Reihen (Marke der Fa. Rockwood Holdings, Inc.), Eisen-(II)-oxid, Eisen-(III)-oxid, Eisen-(II/III)-oxid, Titandioxid, Hydroxylapatit, Zinkoxid und Zinksulfid.

Bevorzugt ist der wenigstens eine feinteilige anorganische Feststoff ausgewählt aus der Gruppe umfassend Siliziumdioxid, Schichtsilikate, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

Insbesondere bevorzugt sind siliziumhaltige Verbindungen, wie pyrogene Kieselsäure, kolloidale Kieselsäure (Siliziumdioxid) und/oder Schichtsilikate.

Vorteilhaft können auch die kommerziell verfügbaren Verbindungen der Aerosil®-, Levasil®-, Ludox®-, Nyacol®-, Nalco®- und Bindzil®-Marken (Siliziumdioxid), Nanofil®-, Optigel®-, Somasif®-, Cloisite®-, Lucentite®-, Saponit®-, Hektorit®- sowie Laponite®-Marken (Schichtsilikate), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CE02-Marken (Cer-(IV)-oxid) und Sachtotec®-Marken (Zinkoxid) in den erfindungsgemäßen Verfahren eingesetzt werden.

Die zur Herstellung der Kompositpartikel einsetzbaren feinteiligen anorganischen Feststoffe sind so beschaffen, dass die im wässrigen Polymerisationsmedium dispergierten Feststoffteilchen einen Teilchendurchmesser von ≤100 nm aufweisen. Erfolgreich werden solche feinteiligen anorganischen Feststoffe eingesetzt, deren dispergierte Teilchen einen Teilchendurchmesser >0 nm aber ≤90 nm, ≤80 nm, ≤70 nm, ≤60 nm, ≤50 nm, ≤40 nm, ≤30 nm, ≤20 nm oder ≤10 nm und alle Werte dazwischen aufweisen. Mit Vorteil werden feinteilige anorganische Feststoffe eingesetzt, welche einen Teilchendurchmesser ≤50 nm aufweisen.

Die Bestimmung der Teilchengröße des feinteiligen anorganischen Feststoffs sowie der nach dem erfindungsgemäßen Verfahren erhältlichen Kompositpartikel erfolgt im Rahmen dieser Schrift generell nach der Methode der quasielastischen Lichtstreuung (DIN-ISO 13321) mit einem High Performance Particle Sizer (HPPS) der Fa. Malvern Instruments Ltd..

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; UII-mann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Dabei können die feinteiligen anorganischen Feststoffe erfindungsgemäß sowohl in Form von Pulvern oder in Form stabiler wässriger Feststoffdispersionen, sogenannter Sole eingesetzt werden.

Die Herstellung von wässrigen Feststoffdispersionen erfolgt dabei häufig direkt bei der Synthese der feinteiligen anorganischen Feststoffe in wässrigem Medium oder altemativ durch Eindispergieren der feinteiligen anorganischen Feststoffe in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden. Häufig handelt es sich bei den wässrigen Feststoffdispersionen um stabile wässrige Feststoffdispersionen.

Unter stabilen wässrigen Feststoffdispersionen werden dabei solche wässrigen Feststoffdispersionen verstanden, die bei einer Anfangsfeststoffkonzentration von ≥0,1 Gew.-%, bezogen auf die wässrige Feststoffdispersion, noch eine Stunde nach ihrer Herstellung oder nach homogener Dispergierung der sedimentierten feinteiligen Feststoffe, ohne weiteren Energieeintrag (wie Rühren oder Schütteln) mehr als 90 Gew.-% des ursprünglich dispergierten Feststoffes in dispergierter Form enthalten.

Die quantitative Bestimmung der Anfangsfeststoffkonzentration und der Feststoffkonzentration nach einer Stunde erfolgt im Rahmen dieser Schrift über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Erfindungsgemäß werden 1 bis 1000 Gew.-%, vorteilhaft 1 bis 100 Gew.-% und insbesondere vorteilhaft 2 bis 70 Gew.-% des anorganischen Feststoffes, bezogen auf die Gesamtmonomerenmenge verwendet.

Das erfindungsgemäße Verfahren erfolgt dergestalt, dass in Verfahrensschritt b) wenigstens eine Teilmenge, oft ≥10, ≥20, ≥30 oder ≥40 Gew.-% und vorteilhaft ≥50, ≥60, ≥70, ≥80 oder ≥90 Gew.-% der Gesamtmenge des anorganischen Feststoffs im wässrigen Polymerisationsmedium unter Ausbildung einer wässrigen Feststoffdispersion vorgelegt wird. Die gegebenenfalls verbliebene Restmenge an anorganischem Feststoff wird dem wässrigen Polymerisationsmedium in Verfahrensschritt d) unter Polymerisationsbedingungen diskontinuierlich in einer oder mehreren Teilmengen oder kontinuierlich in gleich bleibenden oder sich verändernden Mengenströmen, insbesondere in Form einer wässrigen Feststoffdispersion zudosiert. Mit Vorteil wird jedoch in Verfahrensschritt b) die Gesamtmenge des anorganischen Feststoffs im wässrigen Polymerisationsmedium in Form einer wässrigen Feststoffdispersion vorgelegt. Wird der anorganische Feststoff in Pulverform eingesetzt, so kann es vorteilhaft sein, das feinteilige Feststoffpulver unter Zuhilfenahme geeigneter Hilfsaggregate, wie beispielsweise Rührer, Dispergatoren oder Ultraschallsonotroden im wässrigen Polymerisationsmedium zu dispergieren.

Bei der Herstellung der wässrigen Kompositpartikel-Dispersionen werden allgemein Dispergierhilfsmittel mitverwendet, die sowohl die feinteiligen anorganischen Feststoffteilchen, wie auch die Monomerentröpfchen und die gebildeten Kompositpartikel im wässrigen Polymerisationsmedium dispers verteilt halten und so die Stabilität der erzeugten wässrigen Kompositpartikel-Dispersionen gewährleisten. Als Dispergierhilfsmittel kommen sowohl die zur Durchführung von radikalischen wässrigen Emulsionspolymerisationen üblicherweise eingesetzten Schutzkolloide, wie auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergierhilfsmittel ausschließlich Emulgatoren eingesetzt, deren relative Molekulargewichte im Unterschied zu den Schutzkolloiden üblicherweise unter 1500 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel I

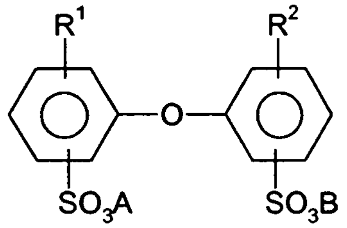

(I)

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen $C_6$- bis $C_{18}$-Alkyl-, - Aralkyl- oder heterocy-

clischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen $\geq$0,1 und $\leq$10 Gew.-%, oft $\geq$0,25 und $\leq$7,0 Gew.-% und häufig $\geq$0,5 und $\leq$5,0 Gew.-% an Dispergierhilfsmitteln, jeweils bezogen auf die Gesamtmonomerenmenge, eingesetzt. Bevorzugt werden Emulgatoren, insbesondere nichtionische und/oder anionische Emulgatoren verwendet. Mit besonderem Vorteil werden anionische Emulgatoren eingesetzt.

Erfindungsgemäß ist es möglich, gegebenenfalls eine Teil- oder die Gesamtmenge an Dispergierhilfsmittel im Polymerisationsgefäß als Bestandteil des eine Teil- oder die Gesamtmenge des anorganischen Feststoffs enthaltenden wässrigen Polymerisationsmediums vorzulegen [Verfahrensschritt b)]. Es ist aber auch möglich, die Gesamtmenge oder die gegebenenfalls verbliebene Restmenge an Dispergierhilfsmittel während der Verfahrensschrittes c) und/oder d) dem wässrigen Polymerisationsmedium zuzuführen. Die Gesamtmenge oder die gegebenenfalls verbliebene Restmenge an Dispergierhilfsmittel kann dem wässrigen Polymerisationsmedium dabei diskontinuierlich in einer oder mehreren Portionen oder kontinuierlich mit gleichbleibenden oder sich verändernden Mengenströmen zudosiert werden. Insbesondere vorteilhaft wird wenigstens eine Teilmenge an Dispergierhilfsmittel in Verfahrensschritt b) vorgelegt. Werden die ethylenisch ungesättigten Monomeren in Verfahrensschritt c) und/oder d) in Form einer wässrigen Monomerenemulsion zudosiert, so werden werden Teilmengen an Dispergierhilfsmittel während des Verfahrensschrittes c) und/oder d), insbesondere als Bestandteil einer wässrigen Monomerenemulsion, eingesetzt.

Erfindungsgemäß kommen als ethylenisch ungesättigte Monomeren alle diejenigen in Betracht, die sich in wässrigem Medium in einfacher Weise radikalisch polymerisieren lassen und welche dem Fachmann nach der Methode der wässrigen Emulsionpolymerisation geläufig sind. Hierzu zählen u.a. Ethylen, vinylaromatische Monomere, wie Styrol, $\alpha$-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyln-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-din-butylester, Nitrile $\alpha,\beta$-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmonomerenmenge normalerweise einen Anteil von $\geq$50 Gew.-%, $\geq$80 Gew.-% oder $\geq$90 Gew.-% auf sich vereinen. In aller Regel weisen diese Monomeren in Wasser bei 25 °C und Atmosphärendruck (1 atm absolut), lediglich eine mäßige bis geringe Löslichkeit, d.h. $\leq$10 g, bevorzugt $\leq$5 g und insbesondere bevorzugt $\leq$2 g pro 100 g entionisiertem Wasser auf.

Weitere Monomere, welche üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Glycidylacrylat, Glycidylmethacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyloder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren in Mengen $\leq$5 Gew.-%, häufig $\geq$0,1 und $\leq$3 Gew.-% und oft $\geq$0,5 und $\leq$2 Gew.-%, jeweils bezogen auf die Gesamtmonomerenmenge zur Polymerisation eingesetzt.

Daneben können als Monomere zusätzlich solche ethylenisch ungesättigten Monomere S eingesetzt werden, die entweder wenigstens eine Säuregruppe und/oder deren entsprechendes Anion oder solche ethylenisch ungesättigten Monomere A, die wenigstens eine Amino-, Amido-, Ureido- oder N-heterocyclische Gruppe und/oder deren am Stickstoff protonierten oder alkylierten Ammoniumderivate enthalten. Bezogen auf die Gesamtmonomerenmenge, beträgt die

Menge an Monomeren S bzw. Monomeren A ≤10 Gew.-%, oft ≥0,1 und ≤7 Gew.-% und häufig ≥0,2 und ≤5 Gew.-%.

Als Monomere S werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/ oder Phosphonsäuregruppe sein. Beispiele für solche Monomere S sind Acrylsäure, Methacrylsäure, Maleinsäure, Fumarsäure, Itaconsäure, Crotonsäure, 4-Styrolsulfonsäure, 2-Methacryloxyethylsulfonsäure, 2-Acrylamido-2-methylpropansulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium oder Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, 2-Acrylamido-2-methylpropansulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere S eingesetzt.

Als Monomere A werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere A, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino) ethylmethacrylat, 2-(N-n-Propylamino)ethylacrylat, 2-(N-n-Propylamino)ethylmethacrylat, 2-(N-iso-Propylamino) ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Arkema Inc.), 2-(N,N-Dimethylamino) ethylacrylat (beispielsweise kommerziell verfügbar als Norsocryl® A-DAME der Fa. Arkema Inc.), 2-(N,N-Dimethylamino) ethylmethacrylat (beispielsweise kommerziell verfügbar als Norsocryl® MADAME der Fa. Arkema Inc.), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-isopropylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino) propylmethacrylat, 3-(N,N-Di-isopropylamino)propylacrylat und 3-(N,N-Di-iso-propylamino)propylmethacrylat.

Beispiele für Monomere A, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N, N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere A, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Arkema Inc.).

Beispiele für Monomere A, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere A folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere A in der am Stickstoff protonierten quartären Ammoniumform vorliegen.

Als Monomere A, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Arkema Inc.), 2-(N,N,N-Trimethylammonium)ethylmethacrylatchlorid (beispielsweise kommerziell

verfügbar als Norsocryl® MADQUAT MC 75 der Fa. Arkema Inc.), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl® ADAMQUAT BZ 80 der Fa. Arkema Inc.), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-( N-Benzyl-N,N-dipropylammonium)ethylacrylatchlorid, 2-( N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium)propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium) propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium) ethylmethacrylatchlorid verwendet.

Selbstverständlich können auch Gemische der vorgenannten ethylenisch ungesättigten Monomere S bzw. A eingesetzt werden.

Häufig kann es vorteilhaft sein, neben den vorgenannten Monomeren zusätzlich ethylenisch ungesättigte Monomere einzusetzen, welche wenigstens eine silziumhaltige funktionelle Gruppe aufweisen (Silanmonomere), wie beispielsweise Vinylalkoxysilane, wie insbesondere Vinyltrimethoxysilan, Vinyltriethoxysilan, Vinyltriisopropoxysilan, Vinyltriphenoxysilan, Vinyltris(dimethylsiloxy)silan, Vinyltris(2-methoxyethoxy)silan, Vinyltris(3-methoxypropoxy)silan und/oder Vinyltris(trimethylsiloxy)silan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)methylbis(trimethylsiloxy)silan, (3-Acryloxypropyl)methyldimethoxysilan, (3-Acryloxypropyl)trimethoxysilan und/oder (3-Acryloxypropyl)tris(trimethylsiloxy)silan, Methacryloxysilane, wie insbesondere (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan (Methacryloxymethyl)methyldiethoxysilan und/oder (3-Methacryloxypropyl)methyldiethyloxysilan. Erfindungsgemäß besonders vorteilhaft werden Acryloxysilane und/oder Methacryloxysilane, insbesondere Methacryloxysilane, wie bevorzugt (3-Methacryloxypropyl) trimethoxysilan, (3-Methacryloxypropyl)methyldimethoxysilan, (3-Methacryloxypropyl)dimethylmethoxysilan, (3-Methacryloxypropyl)triethoxysilan, (Methacryloxymethyl)methyldiethoxysilan und/oder (3-Methacryloxypropyl)methyldiethoxysilan. Die Menge an Silanmonomere beträgt ≥0,01 und ≤10 Gew.-%, vorteilhaft ≥0,1 und ≤5 Gew.-% und insbesondere vorteilhaft ≥0,1 und ≤2 Gew.-%, jeweils bezogen auf die Gesamtmonomerenmenge.

Mit Vorteil werden in Verfahrensschritt c) ≥1 und ≤15 Gew.-% und insbesondere vorteilhaft ≥5 und ≤15 Gew.-% der Gesamtmonomerenmenge zudosiert.

Alle vorgenannten ethylenisch ungesättigten Monomere können dabei als separate Einzelströme oder im Gemisch diskontinuierlich in einer oder mehreren Portionen oder kontinuierlich mit gleichbleibenden oder sich ändernden Mengenströmen in den Verfahrensstufen c) und/oder d) zudosiert werden. Dabei kann die Zugabe der ethylenisch ungesättigten Monomeren in Substanz, in Form eines lösungsmittelfreien oder lösungsmittelhaltigen Monomerengemisches oder vorteilhaft in Form einer wässrigen Monomerenemulsion erfolgen. Selbstverständlich umfasst das erfindungsgemäße Verfahren auch die dem Fachmann geläufigen unterschiedlichsten Monomerzulauffahrweisen, wie beispielsweise Kem/Schale- oder Gradientenfahrweise.

Mit besonderem Vorteil wird die Zusammensetzung der ethylenisch ungesättigten Monomeren so gewählt, dass das resultierende Polymerisat eine Glasübergangstemperatur ≥-60 und ≤130 °C, bevorzugt ≤60 °C, insbesondere bevorzugt ≤40 °C und häufig ≥-50 °C und oft ≥-40 °C oder ≥-30 °C aufweist.

Üblicherweise erfolgt die Bestimmung der Glasübergangstemperatur nach DIN 53 765 (Differential Scanning Calorimetry, 20 K/min, midpoint-Messung).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $Tg^1$, $Tg^2$, .... $Tg^n$ die Glasübergangstemperaturen

der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Zur Auslösung der radikalischen Polymerisation kommen alle diejenigen radikalischen Polymerisationsinitiatoren (Radikalinitiatoren) in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AI-BA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. Werden erfindungsgemäß Redoxinitiatorsysteme eingesetzt, so werden häufig die Oxidationsmittel und die Reduktionsmittel parallel zudosiert oder bevorzugt die Gesamtmenge des entsprechenden Oxidationsmittels vorgelegt und lediglich das Reduktionsmittel zudosiert. Die Gesamtmenge an Radikalinitiator wird bei Redoxinitiatorsystemen aus den Gesamtmengen an Oxidations- und Reduktionsmitteln gebildet. Als Radikalinitiatoren bevorzugt werden jedoch anorganische und organische Peroxide und insbesondere anorganische Peroxide, häufig in Form wässriger Lösungen eingesetzt. Insbesondere als Radikalinitiator bevorzugt sind Natriumperoxodisulfat, Kaliumperoxodisulfat, Ammoniumperoxodisulfat, Wasserstoffperoxid und/oder tert.-Butylhydroperoxid.

Erfindungsgemäß beträgt die Menge an insgesamt eingesetztem Radikalinitiator 0,05 bis 2 Gew.-%, vorteilhaft 0,1 bis 1,5 Gew.-% und insbesondere vorteilhaft 0,3 bis 1,0 Gew.%, jeweils bezogen auf die Gesamtmonomerenmenge.

Erfindungswesentlich ist, dass der wässrigen Feststoffdispersion in Verfahrensstufe c) insgesamt $\geq$0,01 und $\leq$20 Gew.-% der Gesamtmonomerenmenge und $\geq$60 Gew.-%, bevorzugt $\geq$70 Gew.-% sowie $\leq$90 Gew.-% oder $\leq$100 Gew.-% und insbesondere bevorzugt $\geq$75 und $\leq$85 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz $\geq$80 Gew.-%, bevorzugt $\geq$85 Gew.-% insbesondere bevorzugt $\geq$90 Gew.-% polymerisiert werden.

Dabei kann die Zugabe des Radikalinitiators zum wässrigen Polymerisationsmedium in Verfahrensstufe c) unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben wird und danach im wässrigen Polymerisationsgemisch Polymerisationsbedingungen eingestellt werden.

In Verfahrensstufe c) kann die Zugabe des Radikalinitiators oder dessen Komponenten diskontinuierlich in einer oder mehreren Portionen oder kontinuierlich mit gleichbleibenden oder sich ändernden Mengenströmen erfolgen.

Die Bestimmung des Monomerenumsatzes ist dem Fachmann prinzipiell geläufig und erfolgt beispielsweise durch reaktionskalorimetrische Bestimmung.

Nachdem in Verfahrensschritt c) die Menge der eingesetzten Monomeren bis zu einem Umsatz $\geq$80 Gew.-% polymerisiert wurden (Polymerisationsstufe 1), werden im nachfolgenden Verfahrensschritt d) die gegebenenfalls verbliebene Restmenge, d.h. $\leq$90, $\leq$80, $\leq$70, $\leq$60 Gew.-% und vorteilhaft $\leq$50, $\leq$40, $\leq$30, $\leq$20 Gew.-% oder $\leq$10 Gew.-% des anorganischen Feststoffs die gegebenenfalls verbliebene Restmenge, d.h. $\leq$40, $\leq$30 oder bevorzugt $\geq$5 und $\leq$25 Gew.-% des radikalischen Polymerisationsinitiators und die verbliebene Restmenge, d.h. $\geq$80 und $\leq$99,99 Gew.-%, bevorzugt $\geq$85 und $\leq$99 Gew.-% und insbesondere bevorzugt $\geq$85 und $\leq$95 Gew.-% der ethylenisch ungesättigten Monomeren unter Polymerisationsbedingungen zudosiert und bis zu einem Monomerenumsatz $\geq$90 Gew.-% polymerisiert (Polymerisationsstufe 2). Dabei kann auch in Verfahrensschritt d) die Zudosierung der jeweiligen Komponenten als separate Einzelströme oder im Gemisch diskontinuierlich in einer oder mehreren Portionen oder kontinuierlich mit gleichbleibenden oder sich ändernden Mengenströmen zudosiert werden. Selbstverständlich ist es auch möglich, dass sich die Radikalinitiatoren oder ethylenisch ungesättigten Monomeren in den Verfahrensschritten c) und d) unterscheiden.

Unter Polymerisationsbedingungen sind im Rahmen dieser Schrift dabei generell diejenigen Temperaturen und Drücke zu verstehen, unter denen die radikalisch initiierte wässrige Emulsionspolymerisation mit ausreichender

Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck in den Verfahrensschritten c) und d) so ausgewählt, dass der eingesetzte Radikalinitiator eine ausreichende Halbwertszeit aufweist und dabei immer genügend Startradikale zur Verfügung stehen, um die Polymerisationsreaktion auszulösen bzw. aufrechtzuerhalten.

In den Verfahrensschritten c) und d) kommt als Reaktionstemperatur für die radikalische wässrige Emulsionspolymerisation in Anwesenheit des feinteiligen anorganischen Feststoffs der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer Atmosphärendruck durchgeführt werden, so dass die Polymerisationstemperatur 100 °C übersteigen und bis zu 170 °C betragen kann. Vorzugsweise wird in Anwesenheit leichtflüchtiger Monomere B, beispielsweise Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei Atmosphärendruck (beispielsweise im Labor) oder Überdruck (beispielsweise im technischen Maßstab) unter Sauerstoffausschluss, insbesondere unter Inertgasatmosphäre, wie beispielsweise unter Stickstoff oder Argon durchgeführt.

Wesentlich für das erfindungsgemäße Verfahren ist, dass dem wässrigen Polymerisationsmedium prinzipiell in untergeordnetem Maße auch gut wasserlösliche organische Lösungsmittel, wie beispielsweise Methanol, Ethanol, Isopropanol, Butanole, aber auch Aceton etc. zugesetzt werden können. Von Bedeutung ist allerdings, dass die Menge an zugesetztem organischem Lösungsmittel so bemessen ist, dass sie am Ende von Verfahrensschritt d) ≤10 Gew.-%, vorteilhaft ≤5 Gew.-% und insbesondere vorteilhaft ≤2 Gew.-%, jeweils bezogen auf die Gesamtmenge an Wasser der erfindungsgemäß erhältlichen wässrigen Kompositpartikel-Dispersion, beträgt. Mit Vorteil werden erfindungsgemäß keinerlei solche Lösungsmittel zugesetzt.

Neben den vorgenannten Komponenten können im erfindungsgemäßen Verfahren zur Herstellung der wässrigen Kompositpartikel-Dispersion optional auch radikalketten-übertragende Verbindungen eingesetzt werden, um die Molekulargewichte der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmonomerenmenge, ist in der Regel ≤5 Gew.-%, oft ≤3 Gew.-% und häufig ≤1 Gew.-%.

Abhängig von der Stabilität der eingesetzten wässrigen Feststoffdispersionen können die Verfahrensschritte c) und d) im sauren, neutralen oder basischen pH-Wertbereich durchgeführt werden. Beim Einsatz von Schichtsilikaten beträgt der pH-Wert vorteilhaft ≥5 und ≤11, insbesondere vorteilhaft ≥6 und ≤10 (jeweilige Probe gemessen bei Raumtemperatur und Atmosphärendruck). Die Einstellung der pH-Wertbereiche ist dem Fachmann geläufig und erfolgt insbesondere mit nichtoxidierenden anorganischen Säuren, wie Salz-, Schwefel- oder Phosphorsäure oder anorganischen Basen, wie Ammoniak, Natrium- oder Kaliumhydroxid.

Selbstverständlich können die nach dem erfindungsgemäßen Verfahren zugänglichen wässrigen Kompositpartikel-Dispersionen auch weitere, dem Fachmann geläufige optionale Hilfsstoffe, wie beispielsweise so genannte Verdicker, Entschäumer, Puffersubstanzen, Konservierungsmittel etc. in üblichen Mengen enthalten.

Werden im erfindungsgemäßen Verfahren Silanmonomere eingesetzt, so werden in einer bevorzugten Ausführungsform der im Verfahrensschritt b) vorgelegten wässrigen Feststoffdispersion, im Verfahrensschritt c) zuerst lediglich ≥5 und ≤70 Gew.-%, vorteilhaft ≥10 und ≤50 Gew.-% der Gesamtmenge der Silanmonomeren während einer

Zeitdauer ≥5 und ≤240 Minuten, vorteilhaft ≥30 und ≤120 Minuten und insbesondere vorteilhaft ≥45 und ≤90 Minuten bei einer Temperatur ≥20 °C, mit Vorteil bei einer Temperatur ≥50 und ≤100 °C und mit besonderem Vorteil bei einer Temperatur ≥65 und ≤95 °C und erst daran anschließend die gegebenenfalls verbliebenen anderen ethylenisch ungesättigten Monomeren und der radikalische Polymerisationsinitiator unter Polymerisationsbedingungen zudosiert. Die verbliebene Restmenge an Silanmonomeren wird anschließend im Verfahrensschritt d) gemeinsam mit den anderen ethylenisch ungesättigten Monomeren unter Polymerisationsbedingungen zudosiert. Die Gesamtmenge an Silanmonomeren beträgt in dieser bevorzugten Ausführungsform ≥0,1 und ≤2 Gew.-%, bezogen auf die Gesamtmonomerenmenge.

Die erfindungsgemäß zugänglichen wässrigen Kompositpartikel-Dispersionen weisen üblicherweise einen Gesamtfeststoffgehalt ≥1 und <70 Gew.-%, häufig ≥5 und ≤65 Gew.-% und oft ≥10 und ≤60 Gew.-% auf.

Die erfindungsgemäß zugänglichen Kompositpartikel besitzen in der Regel Teilchendurchmesser von >10 und ≤1000 nm, häufig ≥25 und ≤500 nm sowie oft ≥50 und ≤250 nm. Die Bestimmung der Teilchengröße der Kompositpartikel erfolgte im Rahmen dieser Schrift generell nach der Methode der quasielastischen Lichtstreuung (DIN-ISO 13321) mit einem High Performance Particle Sizer (HPPS) der Fa. Malvern Instruments Ltd..

Die erfindungsgemäß zugänglichen Kompositpartikel können unterschiedliche Strukturen aufweisen. Dabei können die Kompositpartikel ein oder mehrere der feinteiligen anorganische Feststoffteilchen enthalten. Die feinteiligen anorganischen Feststoffteilchen können vollständig von der Polymermatrix umhüllt sein. Es ist aber auch möglich, dass ein Teil der feinteiligen anorganischen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen anorganischen Feststoffteilchen auf der Oberfläche der Polymermatrix gebunden ist.

Auch können die nach Abschluss der Polymerisationsreaktion im wässrigen Polymerisationsmedium verbliebenen Restmengen an nicht umgesetzten ethylenisch ungesättigten Monomeren oder anderen leichtflüchtigen Verbindungen durch Dampf- und/oder Inertgasstrippung bzw. durch chemische Restmonomerenentfernung, wie sie beispielsweise in den Schriften DE-A 4419518, EP-A 767180 oder DE-A 3834734 beschrieben sind, entfernt werden, ohne dass sich die Eigenschaften der wässrigen Kompositpartikel-Dispersionen nachteilig verändern.

Die nach dem erfindungsgemäßen Verfahren gebildeten wässrigen Kompositpartikel-Dispersionen sind stabil und weisen einen niedrigen Koagulatgehalt, in der Regel ≤0,5 Gew.-%, bevorzugt ≤0,1 Gew.-% und insbesondere bevorzugt ≤0,05 Gew.-%, jeweils bezogen auf die wässrige Kompositpartikel-Dispersion auf.

Die Bestimmung des Koagulatgehaltes erfolgt im Rahmen dieser Schrift durch Filtration der wässrigen Kompositpartikel-Dispersion über ein Nylonsieb mit einer Maschenweite von 45 μm.

Aus den über das erfindungsgemäße Verfahren zugänglichen wässrigen Kompositpartikel-Dispersionen lassen sich in einfacher Weise anorganische Feststoffteilchen enthaltende Polymerisatfilme herstellen. Diese Polymerisatfilme weisen gegenüber den keine anorganischen Feststoffteilchen enthaltenden Polymerisatfilmen in der Regel eine erhöhte mechanische Festigkeit, ein geringeres Weißanlaufen, eine bessere Haftung an mineralischen Oberflächen, eine verbesserte Resistenz gegenüber organischen Lösemitteln sowie eine erhöhte Kratzfestigkeit, Blockfestigkeit und Wärmestandfestigkeit auf.

Wässrige Kompositpartikel-Dispersionen, welche nach dem beschriebenen erfindungsgemäßen Verfahren hergestellt wurden, eignen sich daher insbesondere als Bindemittel, zur Herstellung einer Schutzschicht, beispielsweise in Anstrichformulierungen, als Komponente in Klebstoffen, zur Modifizierung von Zement- und Mörtelformulierungen oder in der medizinischen Diagnostik (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wässrigen Dispersionssystemen einsetzen.

Auch sei festgehalten, dass die erfindungsgemäß zugänglichen wässrigen Kompositpartikel-Dispersionen in einfacher Weise zu redispergierbaren Kompositpartikelpulvem trockenbar sind (z.B. mittels Gefriertrocknung oder Sprühtrocknung). Dies gilt insbesondere dann, wenn die Glasübergangstemperatur der Polymermatrix der erfindungsgemäß zugänglichen Kompositpartikel ≥50 °C, vorzugsweise ≥60 °C, besonders bevorzugt ≥70 °C, ganz besonders bevorzugt ≥80 °C und insbesondere bevorzugt ≥90 °C bzw. ≥100 °C beträgt. Die Kompositpartikelpulver eignen sich u.a. als Additive für Kunststoffe, Komponenten für Tonerformulierungen oder Zusatzstoffe in elektrophotographischen Anwendungen sowie als Komponenten in Zement- und Mörtelformulierungen.

Die Erfindung soll anhand der nachfolgenden nicht einschränkenden Beispiele erläutert werden.

Beispiele

a) Herstellung einer wässrigen Kompositpartikel-Dispersion

Beispiel 1

In einen 2 l-Vierhalskolben, ausgerüstet mit einem Rückflußkühler, einem Thermometer, einem mechanischen Rührer sowie einer Dosiervorrichtung, wurden bei 20 bis 25 °C (Raumtemperatur) und Atmosphärendruck unter Stickstoffatmosphäre und Rühren (200 Umdrehungen pro Minute) 416,6 g Nalco® 1144 (40 gew.-%iges kolloidales Siliziumdioxid mit einem mittleren Teilchendurchmesser von 14 nm [nach Angaben des Herstellers]; Marke der Fa. Nalco), daran anschließend 10,8 g einer 20 gew.-%igen wässrigen Lösung eines $C_{16}C_{18}$-Fettalkoholethoxylats mit durchschnittlich 18 Ethylenoxid-Einheiten (Lutensol® AT18; Marke der BASF SE) und daran anschließend 315,0 g entionisiertes Wasser innerhalb von 5 Minuten zugegeben. Anschließend wurde das Vorlagengemisch auf 70 °C aufgeheizt.

Parallel stellte man als Zulauf 1 eine Monomerenmischung, bestehend aus 12,6 g Methylmethacrylat, 18,8 g n-Butylacrylat und 1,5 g Methacrylsäure, als Zulauf 2 2,9 g (3-Methacryloxypropyl)trimethoxysilan, als Zulauf 3 eine Initiatorlösung, bestehend aus 2,1 g Natriumperoxodisulfat, 5,4 g einer 10 gew.-%igen wässrigen Lösung von Natriumhydroxid und 193,0 g entionisiertem Wasser sowie als Zulauf 4 eine Monomermischung bestehend aus 87,5 g Methylmethacrylat, 131,2 g n-Butylacrylat und 2,5 g Hydroxyethylmethacrylat, her.

Anschließend wurden dem gerührten Vorlagengemisch bei 70 °C innerhalb von 90 Minuten über eine separate Zulaufleitung 0,9 g von Zulauf 2 kontinuierlich zugegeben. Dabei heizte man das Reaktionsgemisch 45 Minuten nach Beginn des Zulaufs 2 auf eine Reaktionstemperatur von 85 °C auf. Eine Stunde nach Beginn des Zulaufs 2 wurden dem Reaktionsgemisch innerhalb einer Zeitspanne von 120 Minuten über zwei separate Zulaufleitungen gleichzeitig beginnend, die Gesamtmenge von Zulauf 1 und 158,8 g von Zulauf 3 mit kontinuierlichem Mengenströmen zudosiert. Daran anschließend wurden dem Reaktionsgemisch innerhalb einer Zeitspanne von 120 Minuten über separate Zulaufleitungen gleichzeitig beginnend, die Gesamtmenge von Zulauf 4 und die verbliebene Restmenge von Zulauf 2 sowie innerhalb einer Zeitspanne von 135 Minuten die verbliebene Restmenge von Zulauf 3 mit kontinuierlichem Mengenströmen zudosiert. Anschließend wurde die erhaltene wässrige Kompositpartikel-Dispersion eine weitere Stunde bei Reaktionstemperatur gerührt und danach auf Raumtemperatur abgekühlt.

Die so erhaltene wässrige Kompositpartikel-Dispersion war transluzent, niedrigviskos und wies einen Feststoffgehalt von 35,5 Gew-% und einen Koagulatgehalt < 0,05 Gew.-% auf, jeweils bezogen auf das Gesamtgewicht der wässrigen Kompositpartikel-Dispersion. Der pH-Wert der Kompositpartikel-Dispersion betrug 9,1. Die mittlere Teilchengröße der Kompositpartikel wurde zu 117 nm bestimmt. Nach der Methode der Analytischen Ultrazentrifunge (AUZ; vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175) konnten keine freien SiliziumdioxidTeilchen nachgewiesen werden.

Der Feststoffgehalt wurde generell bestimmt, indem ca. 1 g der Kompositpartikel-Dispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Zur Bestimmung des Koagulatgehaltes wurden bei Raumtemperatur ca. 500 g der wässrigen Kompositpartikel-Dispersion über ein 45 μm-Nylonsieb filtriert, welches vor der Filtration gewogen wurde. Nach der Filtration spülte man das Sieb mit wenig entionisiertem Wasser (ca. 50 ml) und trocknete es dann im Trockenschrank bei 100 °C und Atmosphärendruck bis zur Gewichtskonstanz (ca. 1 Stunde). Nach dem Abkühlen auf Raumtemperatur wurde das Sieb erneut gewogen. Der Gehalt an Koagulat ergab sich als Differenz der beiden Wägungen, jeweils bezogen auf die zur Filtration eingesetzte Menge an wässriger Kompositpartikeldispersion. Es wurden jeweils zwei Bestimmungen des Koagulatgehaltes durchgeführt. Die in den jeweiligen Beispielen angegebenen Werte entsprechen den Mittelwerten dieser beiden Bestimmungen.

Die Bestimmung der Teilchengröße der Kompositpartikel erfolgte generell nach der Methode der quasielastischen Lichtstreuung (DIN-ISO 13321) mit einem High Performance Particle Sizer (HPPS) der Fa. Malvern Instruments Ltd..

Der pH-Wert wurde generell mittels eines Micropal pH538-Gerätes der Fa. Wissenschaftlich-Technische-Werkstätten (WTW) GmbH bei Raumtemperatur bestimmt.

Vergleichsbeispiel 1

Die Durchführung von Vergleichsbeispiel 1 erfolgte analog der Durchführung von Beispiel 1 mit dem Unterschied, dass als Zulauf 1 25,5 g Methylmethacrylat, 38,3 g n-Butylacrylat und 1,5 g Methacrylsäure und als Zulauf 4 74,5 g Methylmethacrylat, 111,8 g n-Butylacrylat und 2,5 g Hydroxyethylmethacrylat eingesetzt wurden.

Die so erhaltene wässrige Kompositpartikel-Dispersion war weiß, hochviskos und wies einen Feststoffgehalt von 35,1 Gew-% und einen Koagulatgehalt 1,17 Gew.-% auf. Der pH-Wert der Kompositpartikel-Dispersion betrug 9,3. Die mittlere Teilchengröße der Kompositpartikel wurde zu 185 nm bestimmt. Es konnten keine freien Siliziumdioxidteilchen nachgewiesen werden.

Vergleichsbeispiel 2

Die Durchführung von Vergleichsbeispiel 2 erfolgte analog der Durchführung von Beispiel 1 mit dem Unterschied, dass als Zulauf 1 51,0 g Methylmethacrylat, 76,5 g n-Butylacrylat und 1,5 g Methacrylsäure und als Zulauf 4 49,0 g Methylmethacrylat, 73,6 g n-Butylacrylat und 2,5 g Hydroxyethylmethacrylat eingesetzt wurden.
Die Durchführung musste jedoch abgebrochen werden, da die wässrige Kompositpartikel-Dispersion 45 Minuten nach dem Start des Zulaufs 4 koagulierte.

Vergleichsbeispiel 3

Die Durchführung von Vergleichsbeispiel 3 erfolgte analog der Durchführung von Beispiel 1 mit dem Unterschied, dass als erste Teilmenge von Zulauf 3 79,5 anstelle von 158,8 g innerhalb von 120 Minuten und als zweite Teilmenge 121,0 g anstelle von 41,7 g innerhalb von 135 Minuten zudosiert wurden.
Die so erhaltene wässrige Kompositpartikel-Dispersion war weiß, niedrigviskos und wies einen Feststoffgehalt von 35,3 Gew-% und einen Koagulatgehalt 0,57 Gew.-% auf, jeweils bezogen auf das Gesamtgewicht der wässrigen Kompositpartikel-Dispersion. Der pH-Wert der Kompositpartikel-Dispersion betrug 9,2. Die mittlere Teilchengröße der Kompositpartikel wurde zu 168 nm bestimmt. Es konnten keine freien Siliziumdioxidteilchen nachgewiesen werden.

Beispiel 2

Die Durchführung von Beispiel 2 erfolgte analog der Durchführung von Beispiel 1 mit dem Unterschied, dass die Gesamtmenge an Zulauf 2 3,8 g betrug, als erste Teilmenge von Zulauf 2 1,2 g anstelle von 0,9 g innerhalb von 90 Minuten und als zweite Teilmenge 2,6 g anstelle von 2,0 g innerhalb von 135 Minuten zudosiert wurden, wobei die Dosierung der zweiten Teilmenge derart erfolgte, dass die Dosierrate zuerst für 90 Minuten 0,007 g/min und daran anschließend für 45 Minuten 0,044 g/min betrug.
Die so erhaltene wässrige Kompositpartikel-Dispersion war transluzent, niedrigviskos und wies einen Feststoffgehalt von 35,6 Gew-% und einen Koagulatgehalt < 0,05 Gew.-% auf, jeweils bezogen auf das Gesamtgewicht der wässrigen Kompositpartikel-Dispersion. Der pH-Wert der Kompositpartikel-Dispersion betrug 9,0. Die mittlere Teilchengröße der Kompositpartikel wurde zu 131 nm bestimmt. Es konnten keine freien Siliziumdioxidteilchen nachgewiesen werden.

Vergleichsbeispiel 4

Die Durchführung von Vergleichsbeispiel 4 erfolgte analog der Durchführung von Beispiel 2 mit dem Unterschied, dass als erste Teilmenge von Zulauf 340,1 g anstelle von 158,8 g innerhalb von 120 Minuten und als zweite Teilmenge 160,4 g anstelle von 41,7 g innerhalb von 135 Minuten zudosiert wurden.
Die so erhaltene wässrige Kompositpartikel-Dispersion war weiß, niedrigviskos und wies einen Feststoffgehalt von 34,8 Gew-% und einen Koagulatgehalt 1,43 Gew.-% auf, jeweils bezogen auf das Gesamtgewicht der wässrigen Kompositpartikel-Dispersion. Der pH-Wert der Kompositpartikel-Dispersion betrug 9,3. Die mittlere Teilchengröße der Kompositpartikel wurde zu 189 nm bestimmt. Es konnten keine freien Siliziumdioxidteilchen nachgewiesen werden.

Vergleichsbeispiel 5

Die Durchführung von Vergleichsbeispiel 5 erfolgte analog der Durchführung von Beispiel 2 mit dem Unterschied, dass als erste Teilmenge von Zulauf 380,2 g anstelle von 158,8 g innerhalb von 120 Minuten und als zweite Teilmenge 120,3 g anstelle von 41,7 g innerhalb von 135 Minuten zudosiert wurden.
Die so erhaltene wässrige Kompositpartikel-Dispersion war weiß, niedrigviskos und wies einen Feststoffgehalt von 35,0 Gew-% und einen Koagulatgehalt 1,11 Gew.-% auf, jeweils bezogen auf das Gesamtgewicht der wässrigen Kompositpartikel-Dispersion. Der pH-Wert der Kompositpartikel-Dispersion betrug 9,1. Die mittlere Teilchengröße der Kompositpartikel wurde zu 151 nm bestimmt. Es konnten keine freien Siliziumdioxidteilchen nachgewiesen werden.

Vergleichsbeispiel 6

Die Durchführung von Vergleichsbeispiel 6 erfolgte analog der Durchführung von Beispiel 2 mit dem Unterschied, dass als erste Teilmenge von Zulauf 3 100,2 g anstelle von 158,8 g innerhalb von 120 Minuten und als zweite Teilmenge 100,3 g anstelle von 41,7 g innerhalb von 135 Minuten zudosiert wurden.
Die so erhaltene wässrige Kompositpartikel-Dispersion war weiß, niedrigviskos und wies einen Feststoffgehalt von 35,2 Gew-% und einen Koagulatgehalt 0,68 Gew.-% auf, jeweils bezogen auf das Gesamtgewicht der wässrigen

Kompositpartikel-Dispersion. Der pH-Wert der Kompositpartikel-Dispersion betrug 9,3. Die mittlere Teilchengröße der Kompositpartikel wurde zu 147 nm bestimmt. Es konnten keine freien Siliziumdioxidteilchen nachgewiesen werden.

b) Untersuchung zur Lagerstabilität

Zur Überprüfung der Lagerstabilität wurden die in den BeispielenNergleichsbeispielen erhaltenen wässrigen Kompositpartikel-Dispersionen unter Rühren mit entionisiertem Wasser auf einen Feststoffgehalt von 34,5 Gew.-% verdünnt, 200 g der jeweils erhaltenen verdünnten wässrigen Kompositpartikel-Dispersion in einer verschlossenen 250 ml Glasflasche bei 70 °C gelagert und täglich visuell auf Gelierung (= starker Viskositätsanstieg) geprüft. In der folgenden Tabelle 1 sind die erhaltenen Ergebnisse aufgelistet.

Tabelle 1: Bestimmung der Lagerstabilität

| Kompositpartikel-Dispersion aus | Gelierung [in Tagen] |
|---|---|
| Beispiel 1 | 43 |
| Vergleichsbeispiel 1 | 8 |
| Vergleichsbeispiel 2 | - |
| Vergleichsbeispiel 3 | 22 |
| Beispiel 2 | 47 |
| Vergleichsbeispiel 4 | 23 |
| Vergleichsbeispiel 5 | 27 |
| Vergleichsbeispiel 6 | 29 |

## Patentansprüche

1. Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, **dadurch gekennzeichnet, dass**

   a) 1 bis 1000 Gew.-% eines anorganischen Feststoffes mit einer mittleren Teilchengröße ≤100 nm und 0,05 bis 2 Gew.-% eines radikalischen Polymerisationsinitiators, bezogen auf die Gesamtmenge an ethylenisch ungesättigten Monomeren (Gesamtmonomerenmenge) eingesetzt werden,
   b) wenigstens eine Teilmenge des anorganischen Feststoffs in einem wässrigen Polymerisationsmedium in Form einer wässrigen Feststoffdispersion vorgelegt wird, daran anschließend
   c) der erhaltenen wässrigen Feststoffdispersion insgesamt ≥0,01 und ≤20 Gew.-% der Gesamtmonomerenmenge und ≥60 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥80 Gew.-% polymerisiert werden (Polymerisationsstufe 1), und daran anschließend dem erhaltenen Polymerisationsgemisch
   d) die gegebenenfalls verbliebene Restmenge des anorganischen Feststoffs, die gegebenenfalls verbliebene Restmenge des radikalischen Polymerisationsinitiators und die verbliebene Restmenge der ethylenisch ungesättigten Monomeren unter Polymerisationsbedingungen zudosiert und bis zu einem Monomerenumsatz ≥90 Gew.-% polymerisiert werden (Polymerisationsstufe 2).

2. Verfahren nach Anspruch 1, **dadurch gekennzeichnet, dass** in Verfahrensschritt b) ≥50 Gew.-% des anorganischen Feststoffs vorgelegt werden.

3. Verfahren nach Anspruch 1 oder 2, **dadurch gekennzeichnet, dass** in Verfahrensschritt b) die Gesamtmenge des anorganischen Feststoffs vorgelegt wird.

4. Verfahren nach einem der Ansprüche 1 bis 3, **dadurch gekennzeichnet, dass** in Verfahrensschritt c) insgesamt ≥1 und ≤15 Gew.-% der Gesamtmonomerenmenge zudosiert werden.

5. Verfahren nach einem der Ansprüche 1 bis 4, **dadurch gekennzeichnet, dass** in Verfahrensschritt c) ≥70 Gew.-% der Gesamtmenge an radikalischem Polymerisationsinitiator zudosiert werden.

6. Verfahren nach einem der Ansprüche 1 bis 5, **dadurch gekennzeichnet, dass** der anorganische Feststoff siliziumhaltig ist.

7. Verfahren nach einem der Ansprüche 1 bis 6, **dadurch gekennzeichnet, dass** als anorganischer Feststoff pyrogene Kieselsäure, kolloidale Kieselsäure und/oder ein Schichtsilikat eingesetzt wird.

8. Verfahren nach einem der Ansprüche 1 bis 7, **dadurch gekennzeichnet, dass** die Gesamtmenge der ethylenisch ungesättigten Monomeren ≥0,01 und ≤10 Gew.-% wenigstens eines, eine siliziumhaltige funktionelle Gruppe aufweisenden ethylenisch ungesättigten Monomeren (Silanmonomer) enthält.

9. Verfahren nach Anspruch 8, **dadurch gekennzeichnet, dass** als Silanmonomer (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan, (Methacryloxymethyl)methyldiethoxysilan und/oder (3-Methacryloxypropyl)methyldiethyloxysilan eingesetzt wird.

10. Verfahren nach Anspruch 8 oder 9, **dadurch gekennzeichnet, dass** im Verfahrensschritt c) der wässrigen Feststoffdispersion zuerst lediglich ≥5 und ≤70 Gew.-% der Gesamtmenge der Silanmonomeren während einer Zeitdauer ≥5 und ≤240 Minuten und daran anschließend die gegebenenfalls verbliebenen anderen ethylenisch ungesättigten Monomeren und der radikalische Polymerisationsinitiator zudosiert werden.

11. Verfahren nach einem der Ansprüche 8 bis 10, **dadurch gekennzeichnet, dass** die Gesamtmenge der Silanmonomeren ≥0,1 und ≤2 Gew.-%, bezogen auf die Gesamtmenge der Monomeren beträgt.

12. Verfahren nach einem der Ansprüche 1 bis 11, **dadurch gekennzeichnet, dass** als Dispergierhilfsmittel ein anionischer und/oder ein nichtionischer Emulgator eingesetzt wird.

13. Verfahren nach einem der Ansprüche 1 bis 12, **dadurch gekennzeichnet, dass** das wässrige Polymerisationsmedium am Ende von Verfahrensschritt d) ≤10 Gew.-% an organischem Lösungsmittel, bezogen auf die Gesamtmenge an Wasser enthält.

## Claims

1. A process for preparing an aqueous dispersion of particles composed of addition polymer and finely divided inorganic solid (aqueous composite-particle dispersion), in which process ethylenically unsaturated monomers are dispersely distributed in aqueous medium and polymerized by the method of free-radical aqueous emulsion polymerization by means of at least one free-radical polymerization initiator in the presence of at least one dispersely distributed, finely divided inorganic solid and at least one dispersant, and which process comprises

   a) using 1% to 1000% by weight of an inorganic solid having an average particle sizes ≤ 100 nm and 0.05% to 2% by weight of a free-radical polymerization initiator, based on the total amount of ethylenically unsaturated monomers (total monomer amount),
   b) including at least a portion of the inorganic solid in an initial charge in an aqueous polymerization medium in the form of an aqueous dispersion of solids, subsequently
   c) metering a total of ≥ 0.01% and ≤ 20% by weight of the total monomer amount and ≥ 60% by weight of the total amount of free-radical polymerization initiator into the resulting aqueous dispersion of solids, and polymerizing the ethylenically unsaturated monomers metered in, under polymerization conditions, up to a monomer conversion of ≥ 80% by weight (polymerization stage 1), and subsequently
   d) metering any remainder of the inorganic solid, any remainder of the free-radical polymerization initiator, and the remainder of the ethylenically unsaturated monomers into the resultant polymerization mixture under polymerization conditions, and carrying out polymerization to a monomer conversion of ≥ 90% by weight (polymerization stage 2).

2. The process according to claim 1, in step b) of which ≥ 50% by weight of the inorganic solid is included in the initial charge.

3. The process according to claim 1 or 2, in step b) of which the total amount of the inorganic solid is included in the initial charge.

4. The process according to any one of claims 1 to 3, wherein a total of ≥ 1% and ≤ 15% by weight of the total monomer amount is metered in in step c).

5. The process according to any one of claims 1 to 4, wherein ≥ 70% by weight of the total amount of free-radical polymerization initiator is metered in in step c).

6. The process according to any one of claims 1 to 5, wherein the inorganic solid is silicon-containing.

7. The process according to any one of claims 1 to 6, wherein pyrogenic (fumed) silica, colloidal silica and/or a phyllosilicate is used as inorganic solid.

8. The process according to any one of claims 1 to 7, wherein the total amount of the ethylenically unsaturated monomers comprises ≥ 0.01% and ≤ 10% by weight of at least one ethylenically unsaturated monomer having a silicon-containing functional group (silane monomer).

9. The process according to claim 8, wherein use is made as silane monomer of (3-methacryloyloxypropyl)trimethoxysilane, (3-methacryloyloxypropyl)methyldimethoxysilane, (3-methacryloyloxypropyl)dimethylmethoxysilane, (3-methacryloyloxypropyl)triethoxysilane, (methacryloyloxymethyl)methyldiethoxysilane and/or (3-methacryloyloxypropyl) methyldiethyloxysilane.

10. The process according to claim 8 or 9, wherein first only ≥ 5% and ≤ 70% by weight of the total amount of silane monomers is metered into the aqueous dispersion of solids in step c) over a time of ≥ 5 and ≤ 240 minutes, and subsequently any remaining other ethylenically unsaturated monomers and the free-radical polymerization initiator are metered in.

11. The process according to any one of claims 8 to 10, wherein the total amount of the silane monomers is ≥ 0.1% and 2% by weight, based on the total amount of the monomers.

12. The process according to any one of claims 1 to 11, wherein an anionic and/or a non-ionic emulsifier is used as dispersant.

13. The process according to any one of claims 1 to 12, wherein at the end of step d) the aqueous polymerization medium comprises ≤ 10% by weight of organic solvent, based on the total amount of water.

## Revendications

1. Procédé de fabrication d'une dispersion aqueuse de particules constituées d'un polymère et d'un solide inorganique finement divisé (dispersion aqueuse de particules composites), selon lequel des monomères éthyléniquement insaturés sont dispersés dans un milieu aqueux et polymérisés par au moins un initiateur de polymérisation radicalaire en présence d'au moins un solide inorganique finement divisé dispersé et d'au moins un adjuvant de dispersion selon le procédé de polymérisation radicalaire en émulsion aqueuse, **caractérisé en ce que**

a) 1 à 1 000 % en poids d'un solide inorganique ayant une taille de particule moyenne ≤ 100 nm et 0,05 à 2 % en poids d'un initiateur de polymérisation radicalaire, par rapport à la quantité totale de monomères éthyléniquement insaturés (quantité totale de monomères) sont utilisés,
b) au moins une partie du solide inorganique est chargée initialement dans un milieu de polymérisation aqueux sous la forme d'une dispersion aqueuse de solides, puis
c) au total ≥ 0,01 et ≤ 20% en poids de la quantité totale de monomères et ≥ 60 % en poids de la quantité totale d'initiateur de polymérisation radicalaire sont ajoutés à la dispersion aqueuse de solides obtenue et les monomères éthyléniquement insaturés ajoutés sont polymérisés dans les conditions de polymérisation jusqu'à une conversion des monomères ≥ 80 % en poids (étape de polymérisation 1), puis
d) la quantité éventuellement restante du solide inorganique, la quantité éventuellement restante de l'initiateur de polymérisation radicalaire et la quantité restante des monomères éthyléniquement insaturés sont ajoutés au mélange de polymérisation obtenu dans les conditions de polymérisation et polymérisés jusqu'à une conversion des monomères ≥ 90 % en poids (étape de polymérisation 2).

2. Procédé selon la revendication 1, **caractérisé en ce que** ≥ 50 % en poids du solide inorganique est chargé initialement à l'étape de procédé b).

3. Procédé selon la revendication 1 ou 2, **caractérisé en ce que** la quantité totale du solide inorganique est chargée initialement à l'étape de procédé b).

4. Procédé selon l'une quelconque des revendications 1 à 3, **caractérisé en ce qu'**au total ≥ 1 et ≤ 15 % en poids de la quantité totale des monomères est ajoutée à l'étape de procédé c).

5. Procédé selon l'une quelconque des revendications 1 à 4, **caractérisé en ce que** ≥ 70 % en poids de la quantité totale d'initiateur de polymérisation radicalaire est ajoutée à l'étape de procédé c).

6. Procédé selon l'une quelconque des revendications 1 à 5, **caractérisé en ce que** le solide inorganique contient du silicium.

7. Procédé selon l'une quelconque des revendications 1 à 6, **caractérisé en ce que** de la silice pyrogénée, de la silice colloïdale et/ou un silicate en feuillets sont utilisés en tant que solide inorganique.

8. Procédé selon l'une quelconque des revendications 1 à 7, **caractérisé en ce que** la quantité totale des monomères éthyléniquement insaturés contient ≥ 0,01 et ≤ 10 % en poids d'au moins un monomère éthyléniquement insaturé comprenant un groupe fonctionnel contenant du silicium (monomère de silane).

9. Procédé selon la revendication 8, **caractérisé en ce que** le (3-méthacryloxypropyl)triméthoxysilane, le (3-méthacryloxypropyl)méthyldiméthoxysilane, le (3-méthacryloxypropyl)diméthylméthoxysilane, le (3-méthacryloxypropyl) triéthoxysilane, le (méthacryloxyméthyl)méthyldiéthoxysilane et/ou le (3-méthacryloxypropyl)méthyldiéthyloxysilane sont utilisés en tant que monomère de silane.

10. Procédé selon la revendication 8 ou 9, **caractérisé en ce qu'**à l'étape de procédé c), seulement ≥ 5 et ≤ 70 % en poids de la quantité totale des monomères de silane est tout d'abord ajoutée à la dispersion aqueuse de solides pendant une durée ≥ 5 et ≤ 240 minutes, puis les autres monomères éthyléniquement insaturés éventuellement restants et l'initiateur de polymérisation radicalaire.

11. Procédé selon l'une quelconque des revendications 8 à 10, **caractérisé en ce que** la quantité totale des monomères de silane est ≥ 0,1 et ≤ 2 % en poids, par rapport à la quantité totale des monomères.

12. Procédé selon l'une quelconque des revendications 1 à 11, **caractérisé en ce qu'**un émulsifiant anionique et/ou non ionique est utilisé en tant qu'adjuvant de dispersion.

13. Procédé selon l'une quelconque des revendications 1 à 12, **caractérisé en ce que** le milieu de polymérisation aqueux contient à la fin de l'étape de procédé d) ≤ 10 % en poids de solvant organique, par rapport à la quantité totale d'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- WO 06072464 A
- WO 08135422 A
- EP 07119197 A
- US 4269749 A
- DE 4419518 A
- EP 767180 A
- DE 3834734 A
- US 4157323 A


### In der Beschreibung aufgeführte Nicht-Patentliteratur


- **LONG et al.** *Tianjin Daxue Xuebao,* 1991, vol. 4, 10-15
- **BOURGEAT-LAMI et al.** *Die Angewandte Makromolekulare Chemie,* 1996, vol. 242, 105-122
- **PAULKE et al.** Synthesis Studies of Paramagnetic Polystyrene Latex Particles in Scientific and Clinical Applications of Magnetic Carriers. Plenum Press, 1997, 69-76
- **ARMES et al.** *Advanced Materials,* 1999, vol. 11 (5), 408-410
- **E. MATIJEVIC.** *Chem. Mater.,* 1993, vol. 5, 412-426
- UII-mann's Encyclopedia of Industrial Chemistry. Verlag Chemie, 1992, vol. 23, 583-660
- **D.F. EVANS ; H. WENNERSTRÖM.** The Colloidal Domain. Verlag Chemie, 1994, 363-405
- **R.J. HUNTER.** Foundations of Colloid Science. Clarendon Press, 1991, vol. I, 10-17
- **S.E. HARDING et al.** Analytical Ultracentrifugation in Biochemistry and Polymer Science. Royal Society of Chemistry, 1992
- **W. MÄCHTLE.** *Analysis of Polymer Dispersions with an Eight-Cell-AUC-Multiplexer: High Resolution Particle Size Distribution and Density Gradient Techniques,* 147-175
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- Homopolymerisaten bilden z. **B. J. BRANDRUP ; E.H. IMMERGUT.** Polymer Handbook. J. Wiley, 1966
- POLYMER HANDBOOK. J.Wiley, 1975
- POLYMER HANBOOK. J. Wiley, 1989
- **J. BRANDRUP ; E.H. IMMERGUT.** Polymerhandbook. John Wiley & Sons, 1989, 133-141
- **B. K. MOSBACH ; L. ANDERSSON.** *Nature,* 1977, vol. 270, 259-261
- **P.L. KRONICK.** *Science,* 1978, vol. 200, 1074-1076
- **W. MÄCHTLE.** Analysis of Polymer Dispersions with an Eight-Cell-AUC-Multiplexer: High Resolution Particle Size Distribution and Density Gradient Techniques. 147-175